# FASCICULE DE BREVET EUROPEEN

(11) **EP 4 263 293 B1**
(45) Date de publication et mention de la délivrance du brevet: **04.03.2026**
(21) Numéro de dépôt: 21836479.2
(22) Date de dépôt: 13.12.2021
(51) Int. Cl.: B60R 19/02, B60Q 1/26, B60K 11/08, F21V 7/00, F21V 11/18, F21V 33/00

(54) **PARE-CHOCS AVEC INDICATION LUMINEUSE DE LA POSITION D'UN ÉLÉMENT D'OBTURATION D'UN CADRE**
STOSSFÄNGER MIT EINER LICHTANZEIGE DER POSITION EINES RAHMENVERSCHLUSSELEMENTS
BUMPER WITH A LIGHT INDICATION OF THE POSITION OF A FRAME CLOSING ELEMENT

(30) Priorité: 15.12.2020 FR 2013269
(43) Date de publication de la demande: 25.10.2023
(73) Titulaire: Valeo Vision, 93012 Bobigny Cedex (FR)
(72) Inventeur: DUBOSC, Christophe, 93012 BOBIGNY Cedex (FR)
(74) Mandataire: Valeo Visibility
(86) Numéro de dépôt international: PCT/EP2021/085395
(87) Numéro de publication internationale: WO 2022/128865

(56) Documents cités:
- EP-A1- 2 589 859
- EP-A1- 3 350 006
- DE-A1- 102009 039 038
- DE-A1- 102014 106 264
- DE-A1- 102019 112 440
- DE-C- 540 655
- FR-A1- 3 090 559
- GB-A- 2 325 514
- GB-A- 2 489 787
- JP-A- 2004 306 713

## Description

La présente invention appartient au domaine de l'indication d'une fonction sur un cadre pour un véhicule automobile. Elle concerne en particulier un pare-chocs avec un dispositif permettant de projeter un faisceau lumineux sur un élément d'obturation d'un cadre, le cadre étant agencé dans la paroi du véhicule, la paroi étant le pare-chocs.

Elle est particulièrement avantageuse dans le cas où l'élément d'obturation est utilisé pour libérer une ouverture pour aérer/refroidir un composant situé derrière le cadre ou pour ventiler l'intérieur du véhicule.

Le document EP 2 589 859 A1 divulgue un phare de véhicule comprenant un réflecteur. Le réflecteur comporte une portion mobile en translation entre une position où elle obture une ouverture et une position où l'ouverture est libérée.

Le document US5125714 A décrit un véhicule comprenant un volet permettant de révéler un dispositif d'éclairage et un dispositif d'aération/refroidissement agencées l'une au-dessus de l'autre. Le volet peut révéler l'un ou l'autre des dispositifs, ou les deux en même temps. Toutefois, il est difficile pour un observateur extérieur de savoir si ce dispositif d'aération/refroidissement est en opération, en particulier lorsque le volet révèle le dispositif d'aération/refroidissement et le dispositif d'éclairage en même temps.

Il existe ainsi un besoin d'identifier l'état de fonctionnement du dispositif d'aération/refroidissement, notamment pour un véhicule automobile.

La présente invention vient améliorer la situation.

A cet effet un premier aspect de l'invention concerne une paroi de véhicule équipée d'un ensemble pour véhicule automobile, l'ensemble comprenant :
- un cadre délimitant une ouverture, le cadre étant intégré à la paroi de véhicule ;
- un élément d'obturation mobile entre :
   ▪ une première position dans laquelle l'élément d'obturation obture au moins partiellement l'ouverture ; et
   ▪ une deuxième position dans laquelle l'ouverture est libérée, la paroi du véhicule étant un pare-chocs du véhicule.

L'ensemble comprend en outre un dispositif lumineux agencé pour projeter un faisceau lumineux sur l'élément d'obturation positionné dans la deuxième position et/ou sur l'élément d'obturation pendant le déplacement de l'élément d'obturation entre la première position et la deuxième position, au moins une partie du faisceau lumineux projeté étant réfléchie par l'élément d'obturation hors de l'ensemble.

On entend par cadre toute structure physique dédiée à maintenir ou à supporter au moins un élément, quelle que soit sa fonction. Le cadre de l'ensemble selon l'invention est intégré dans une paroi extérieure d'un véhicule. Dans un exemple de réalisation qui n'est pas selon l'invention, le cadre de l'ensemble peut être intégré dans une paroi intérieure tel qu'un tableau de bord avec une fonction d'aération ou de climatisation intégrée.

La projection d'un faisceau lumineux sur l'élément d'obturation permet d'identifier le passage dans la deuxième position et ainsi d'indiquer la position d'ouverture, sans entraver le déplacement de l'élément d'obturation. De plus, lorsque le faisceau lumineux est projeté pendant le déplacement de l'élément d'obturation, la cinématique de déplacement est rendue visible, le faisceau lumineux réfléchi hors de l'ensemble variant avec le déplacement de l'élément d'obturation. Lorsque le faisceau lumineux n'est projeté que lorsque l'élément d'obturation est en deuxième position, l'activation du dispositif lumineux est réduite ce qui permet de limiter la consommation énergétique du dispositif lumineux.

Ainsi, l'ensemble proposé permet d'indiquer par la lumière l'état d'ouverture/fermeture d'un élément d'obturation faisant partie d'un dispositif d'aération/refroidissement pour véhicule. Ceci aide à identifier l'état de fonctionnement de ce dispositif d'aération/refroidissement.

Selon un mode de réalisation, la deuxième position de l'élément d'obturation définit l'intérieur du cadre et le dispositif lumineux peut être dans une surface intérieure du cadre ou dans une épaisseur du cadre.

Ainsi, la lumière émise directement par la source lumineuse, sans être réfléchie par l'élément d'obturation, est limitée, ce qui permet d'améliorer la visibilité du faisceau lumineux réfléchi par l'élément d'obturation.

Selon un mode de réalisation, le dispositif lumineux peut être agencé le long de l'ouverture du cadre. A titre d'exemple, le dispositif lumineux peut être agencé sur un bord faisant partie intégrante du cadre.

Le dispositif lumineux peut être agencé de manière à émettre des rayons lumineux directement hors de l'ensemble.

Ce mode de réalisation permet de rendre visible la position du cadre, donc la position de l'ouverture, même lorsque l'élément d'obturation est en première position. De cette manière, l'emplacement où se réalise la fonction d'aération/refroidissement est rendu visible à l'utilisateur.

En complément, le dispositif lumineux peut être agencé de façon à ce que les rayons lumineux émis directement hors de l'ensemble réalisent une fonction de signalisation.

Ainsi, un même dispositif de projection lumineuse est apte à réaliser une fonction de signalisation, par exemple du véhicule, et une fonction de d'indication de la position de l'élément d'obturation. Aucune restriction n'est attachée à ce qui est entendu par « fonction de signalisation » qui peut être une fonction de feu de circulation diurne (encore appelé DRL-abréviation de Daytime Running Lamp en anglais), une fonction de feu de stop, feu de position, clignotant, par exemple.

Selon un mode de réalisation, l'élément d'obturation peut être un clapet pivotant autour d'un axe associé au cadre entre la première position et la deuxième position. Ledit axe, dit axe de pivotement, peut être l'axe d'une charnière faisant partie de l'ensemble et reliant l'élément d'obturation au cadre.

Le dispositif lumineux peut comprendre au moins une source de lumière, par exemple au moins une diode électroluminescente (DEL ou LED, l'abrégé de light-emitted diode en anglais). Le dispositif lumineux peut comprendre en outre un dispositif de mise en forme apte à former un faisceau lumineux à partir des rayons lumineux émis par la source de lumière.

Selon un mode de réalisation, l'ensemble peut comprendre une pluralité de dispositifs lumineux agencés sur le cadre le long de l'ouverture. Ladite pluralité de dispositifs lumineux peut être agencée sur un bord du cadre.

Un tel mode de réalisation permet de personnaliser la fonction de signalisation, en fonction notamment de la forme de la jonction entre la paroi et l'élément d'obturation.

Selon un mode de réalisation, dans la première position, l'élément d'obturation peut obturer complètement l'ouverture et assurer une continuité du cadre. L'aérodynamisme du cadre ainsi que la discrétion de l'élément d'obturation sont améliorés dans la première position.

Selon un mode de réalisation de l'invention, l'élément d'obturation peut comprendre une surface réfléchissante apte à réfléchir de manière directive les rayons lumineux émis par le dispositif lumineux.

Selon un mode de réalisation, l'élément d'obturation peut comprendre une surface diffusante apte à réfléchir par diffusion des rayons lumineux vers l'extérieur de la paroi sur réception du faisceau lumineux émis par le dispositif lumineux.

Selon un mode de réalisation, le cadre et l'élément d'obturation sont formés en une seule pièce. En particulier, le cadre et l'élément d'obturation sont joints par une liaison dépourvue de charnière. La mobilité de l'élément d'obturation est alors permise par la souplesse du matériau le formant. Il est ainsi possible de minimiser les jeux entre l'ouverture et l'élément d'obturation dans la première position.

Selon l'invention, la paroi de véhicule est un pare-chocs du véhicule. Le cadre de l'ensemble selon le premier aspect de l'invention est alors intégré au pare-chocs du véhicule.

Un deuxième aspect de l'invention concerne un véhicule comprenant une paroi de véhicule selon le premier aspect de l'invention..

D'autres caractéristiques et avantages de l'invention apparaîtront à l'examen de la description détaillée ci-après, et des dessins annexés sur lesquels :
[Fig 1a] illustre un ensemble comprenant un élément d'obturation dans une première position, selon un premier mode de réalisation de l'invention;
[Fig 1b] illustre un ensemble comprenant un élément d'obturation dans une position intermédiaire, selon un premier mode de réalisation de l'invention ;
[Fig 1c] illustre un ensemble comprenant un élément d'obturation dans une deuxième position, selon un premier mode de réalisation de l'invention ;
[Fig 2a] illustre un ensemble comprenant un élément d'obturation dans une première position, selon un deuxième mode de réalisation de l'invention;
[Fig 2b] illustre un ensemble comprenant un élément d'obturation dans une position intermédiaire, selon un deuxième mode de réalisation de l'invention;
[Fig 2c] illustre un ensemble comprenant un élément d'obturation dans une deuxième position, selon un deuxième mode de réalisation de l'invention.

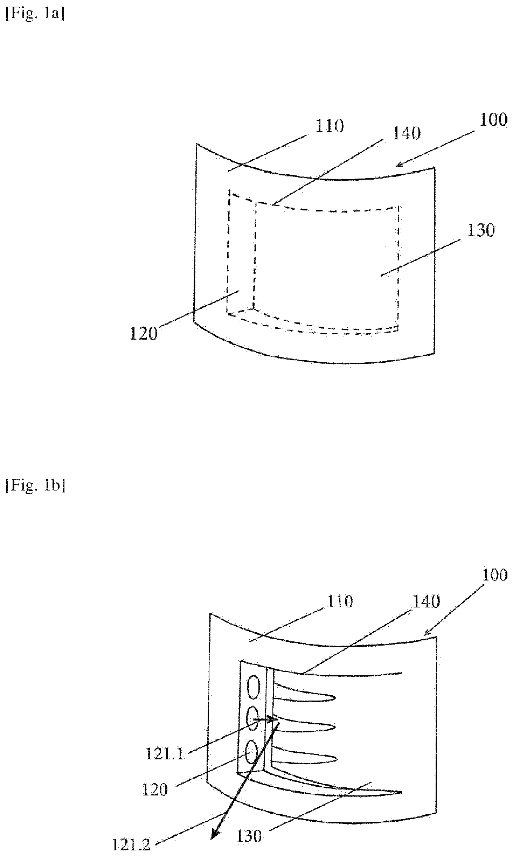

Les figures 1a à 1c présentent un ensemble 100 selon un premier mode de réalisation de l'invention.

L'ensemble 100 comprend un élément d'obturation 130, un cadre 110, ainsi qu'un dispositif lumineux 120. Le cadre 110 peut être intégré dans une paroi d'un véhicule, par exemple dans un pare-chocs.

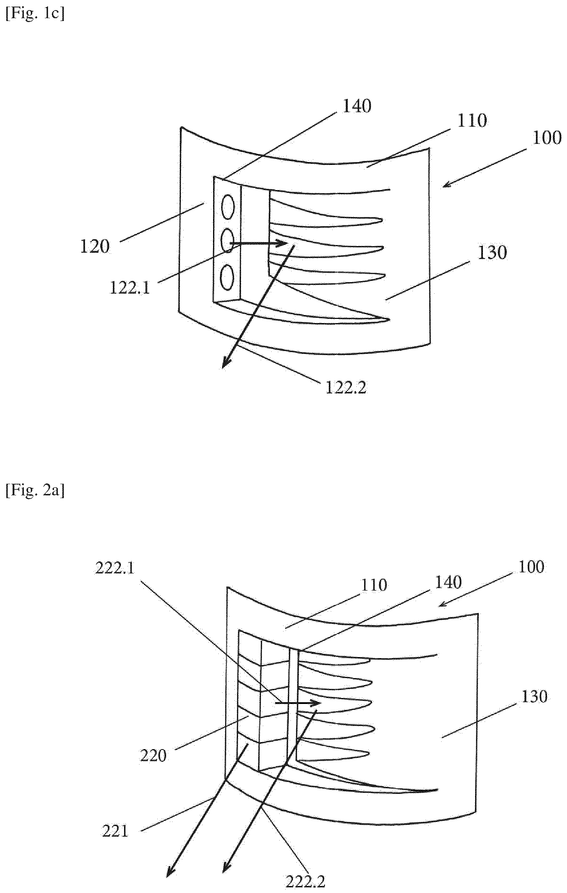

L'élément d'obturation est conformé pour obturer au moins partiellement une ouverture 140 du cadre 110. Sur les figures décrites ici, l'obturation est totale et l'ouverture est uniquement apparente sur les figures 1b et 1c. Toutefois, l'invention s'applique indifféremment au cas où l'élément d'obturation 130 n'obture que partiellement l'ouverture 140.

L'élément d'obturation 120 est mobile et conformé pour adopter au moins une première position, illustrée sur la figure 1a, et une deuxième position illustrée sur la figure 1c, la figure 1b illustrant une position intermédiaire entre la première position et la deuxième position.

Dans la première position, la forme de l'élément d'obturation 130 étant complémentaire de celle du cadre 110, l'aérodynamisme du cadre est optimisé ainsi que l'aspect esthétique, ce qui est avantageux dans le cas où le cadre est intégré dans la paroi d'un véhicule, tel qu'un pare-chocs par exemple.

L'élément d'obturation 130 n'est ainsi pas visible dans la première position sur la figure 1c, selon le premier mode de réalisation.

Dans la position intermédiaire de la figure 1b, l'élément d'obturation 110 se déplace vers l'intérieur du cadre 110, libérant ainsi partiellement l'ouverture 140. De l'air peut ainsi pénétrer derrière le cadre 110 assurant ainsi une fonction de refroidissement à un composant situé derrière le cadre, non représenté sur les figures, comme ce peut être le cas lorsque le cadre est dans le pare-chocs d'un véhicule, ou pour créer un circuit d'air par exemple pour refroidir l'intérieur du véhicule. L'aérodynamisme du véhicule est cependant réduit lorsque l'élément d'obturation 130 est dans la deuxième position.

Comme il apparaît sur la figure 1b, le dispositif lumineux 120 projette un faisceau lumineux vers l'intérieur de la paroi 110. A cet effet, le dispositif lumineux 120 peut être agencé à l'intérieur du cadre 110, qui peut correspondre à l'intérieur du véhicule, ou encore dans l'épaisseur du cadre 110 comme représenté sur les figures 1b et 1c. L'intérieur du cadre est défini selon l'invention par la deuxième position de l'élément d'obturation.

Dès lors, lorsque l'élément d'obturation 110 n'est pas dans la première position, la surface de l'élément d'obturation 130 renvoie une partie du faisceau lumineux émis par le dispositif de projection lumineuse 120, hors de l'ensemble 100, ici vers l'extérieur du cadre 110. Un rayon lumineux 121.1 émis par le dispositif lumineux 120 est ainsi renvoyé vers l'extérieur en un rayon lumineux 121.2.

Afin de réfléchir au moins une partie du faisceau lumineux émis par le dispositif lumineux 120, la surface de l'élément d'obturation 130 peut être apte à réfléchir de manière directive ou par diffusion. Le rayon lumineux 121.2 est donc soit réfléchi de manière directive, soit diffusé. Des exemples de matériaux ou revêtements réfléchissants ou diffusants sont bien connus et ne sont pas explicités davantage dans la présente description.

La figure 1c illustre un ensemble 100 selon le premier mode de réalisation, lorsque l'élément d'obturation 130 est dans la deuxième position. Dans cette deuxième position, l'entrée d'air est maximale ce qui permet l'aération/ventilation derrière le cadre 110 et notamment le refroidissement d'un composant du véhicule situé derrière le cadre 110, tel que des freins, une batterie ou un moteur, non représenté sur les figures.

En outre, comme représenté en référence à la figure 1b précédemment, le dispositif lumineux 120 émet un faisceau lumineux qui est au moins partiellement renvoyé par l'élément d'obturation 130 vers l'extérieur du cadre 110. Le rayon lumineux 122.1 illustré sur la figure 1c et émis par le dispositif lumineux 120 est renvoyé en un rayon lumineux 122.2 vers l'extérieur du cadre 110 par l'élément d'obturation.

Comme illustré sur les figures 1b et 1c, le faisceau lumineux renvoyé par l'élément d'obturation 130 varie selon la position de ce dernier, ce qui permet de rendre visible la cinématique du passage de l'élément d'obturation 130 de la première position à la deuxième position.

En variante, le dispositif lumineux 120 n'émet pas de faisceau lumineux de manière continue mais projette uniquement le faisceau lumineux lorsque l'élément d'obturation 130 est dans la deuxième position. A cet effet, un capteur ou un dispositif mécanique est apte à détecter la deuxième position de l'élément d'obturation, de manière à activer le dispositif lumineux 120. Dans cette variante, aucune indication lumineuse n'est observable dans la position intermédiaire illustrée sur la figure 1b.

Dans l'exemple représenté sur les figures 1a à 1c, l'ensemble 100 comprend quatre dispositifs lumineux 120. Toutefois, aucune restriction n'est attachée au nombre de dispositifs lumineux 120, qui peut être n'importe quel nombre supérieur ou égal à 1. Par ailleurs, les dispositifs lumineux illustrés sont circulaires. Aucune restriction n'est attachée à leur forme qui peut être rectangulaire, carré, circulaire, ovale, etc.

Aucune restriction n'est attachée au mécanisme de déplacement de l'élément d'obturation 120. L'élément d'obturation 130 peut être un clapet qui pivote autour d'un axe entre une première position fermée et une deuxième position ouverte. Un tel axe, dit axe de pivotement, peut être l'axe d'une charnière faisant partie de l'ensemble et reliant l'élément d'obturation au cadre 110. En variante, l'élément d'obturation 130 peut être déplacé par translation notamment vers l'intérieur du cadre 110. Dans une autre variante, le cadre 110 et l'élément d'obturation 130 sont formés en une seule pièce. La jonction entre le cadre 110 et l'élément d'obturation 130 est alors dépourvue de charnière ou de tout autre élément. La mobilité de l'élément d'obturation 130 est alors permise par la souplesse du matériau le formant. L'invention s'applique indifféremment à d'autres variantes, l'élément d'obturation 130 étant défini par sa capacité à assurer, au moins partiellement, une continuité de la paroi dans une première position (forme complémentaire de la paroi), et la libération de l'ouverture 140, dans une deuxième position (capacité à s'écarter du cadre 110 vers l'intérieur).

Les figures 2a à 2c présentent l'ensemble 100 selon un deuxième mode de réalisation de l'invention.

Dans ce deuxième mode de réalisation, seul le ou les dispositifs de projection lumineuse 220 diffère par rapport aux dispositifs lumineux 120 des figures 1a à 1c. En effet, le dispositif lumineux 220 est apte à émettre de la lumière directement hors de l'ensemble 100, notamment le rayon lumineux 221. A cet effet, le dispositif lumineux 220 peut être monté dans l'épaisseur et sur une surface extérieure du cadre 110. En variante, le dispositif lumineux 220 peut être monté à l'intérieur et à l'extérieur du cadre 110, aucun faisceau lumineux n'étant projeté depuis l'épaisseur de la paroi 110. Les dispositifs lumineux 220 ont été représentés sous forme rectangulaire. Toutefois, comme pour les dispositifs lumineux 120, aucune restriction n'est attachée à leur forme.

Ainsi, même dans la première position illustrée à la figure 2a, le dispositif de projection lumineuse 220 rend visible une bordure de l'ouverture 140. Dans la position intermédiaire et dans la deuxième position, le dispositif lumineux 220 émet des rayons lumineux 221 directement vers l'extérieur et émet en outre des rayons lumineux 222.1 et 223.1 renvoyés par l'élément d'obturation 130 en rayons 222.2 et 232.2, respectivement.

Comme pour le premier mode de réalisation, sur les figures 2a à 2c, une pluralité de dispositifs lumineux 220 ont été illustrés. Toutefois, aucune restriction n'est attachée au nombre de dispositifs lumineux 220 qui peut être n'importe quel nombre supérieur ou égal à 1.

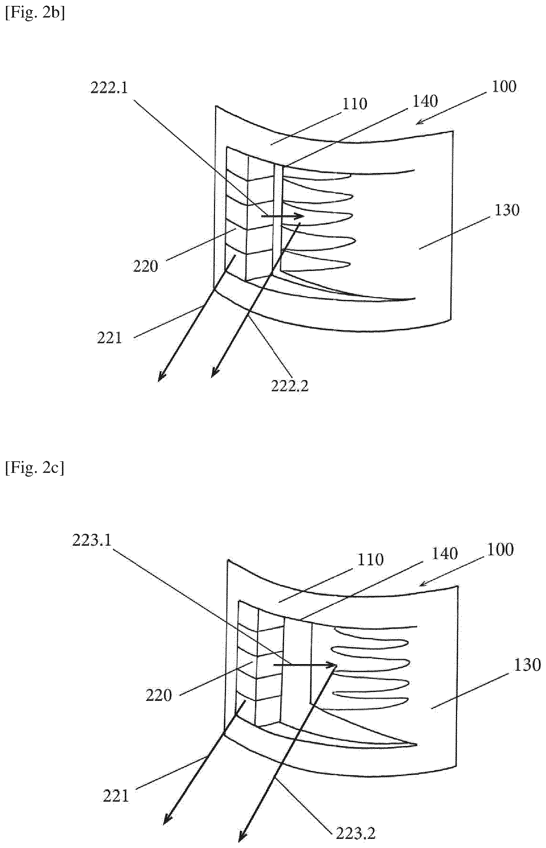

Comme illustré sur les figures 2b et 2c, le faisceau lumineux renvoyé par l'élément d'obturation 130 varie selon la position de ce dernier, ce qui permet de rendre visible la cinématique du passage de l'élément d'obturation 130 de la première position à la deuxième position.

Le deuxième mode de réalisation permet de rendre visible à la fois la position de l'ouverture en position fermée, ainsi que la cinématique de déplacement de l'élément d'obturation 130 lors de son passage en deuxième position.

En variante, le dispositif lumineux 220 émettant les rayons lumineux directs 221 vers l'extérieur du cadre 110 et le dispositif lumineux 220 émettant les rayons lumineux 222.1 et 223.1 vers l'intérieur du cadre 110, peuvent être distincts. Dans cette variante, le dispositif lumineux 220 éclairant vers l'intérieur du cadre 110 peut être activé uniquement en deuxième position, ou bien dès que l'ouverture de l'élément d'obturation 130 débute.

Selon le deuxième mode de réalisation, le dispositif lumineux 220 peut participer à une autre fonction que l'indication de la position de l'ouverture 120 et de la cinématique de déplacement de l'élément d'obturation 120. Par exemple, le dispositif lumineux 220 peut participer à une fonction de signalisation, telle qu'une fonction de signalisation de jour de véhicule, de type DRL par exemple (pour « Daytime Running Light » en anglais), qui permet d'améliorer la visibilité du véhicule depuis l'extérieur, notamment pour les autres usagers de la route.

Comme pour le premier mode de réalisation, afin de réfléchir au moins une partie du faisceau lumineux émis par le dispositif lumineux 220, la surface de l'élément d'obturation 130 peut être réfléchissante ou diffusante. Les rayons lumineux 222.2 et 223.2 sont ainsi soit réfléchis de manière directive, soit diffusés. Des exemples de matériaux ou revêtements réfléchissants ou diffusants sont bien connus et ne sont pas explicités davantage dans la présente description.

Pour les deux modes de réalisation présentés, aucune restriction n'est attachée à la technologie employée pour les dispositifs lumineux, ceux-ci pouvant être basée sur des diodes électroluminescentes, de type LED par exemple, avec au moins un élément photoémissif, ou toute autre technologie d'émission lumineuse (laser, matrix laser, xénon, halogène notamment). Une LED présente l'avantage d'une bonne qualité de faisceau lumineux par rapport à leur coût. Le dispositif lumineux 120 peut comprendre au moins une source lumineuse ainsi qu'un dispositif de mise en forme agencé pour projeter un faisceau lumineux, non représenté sur les figures. Le dispositif de mise en forme peut être une optique de projection, ou un élément optique diffusant.

De plus, dans la description des figures ci-dessus, le dispositif lumineux 120 ou 220 éclaire l'élément d'obturation 130 durant son déplacement entre les première et deuxième positions. En variante, le dispositif lumineux 120 ou 220 projette un faisceau lumineux sur l'élément d'obturation 130 uniquement lorsque l'élément d'obturation 130 est en deuxième position, ce qui permet de rendre visible la position ouverte de l'élément d'obturation, tout en réduisant la consommation énergétique du dispositif lumineux. Dans les deux cas, l'ensemble comprenant le dispositif lumineux 120 et 220 peut être piloté par une unité de commande pour participer à un scénario d'allumage activé lors du démarrage du véhicule. Ce scénario d'allumage est encore appelé « scénario d'accueil », ou « welcome scenario » en anglais, ce qui permet de satisfaire davantage l'utilisateur du véhicule.

## Revendications

1. Paroi de véhicule équipée d'un ensemble (100) pour véhicule automobile, l'ensemble (100) comprenant :
- un cadre (110) délimitant une ouverture (140) ;
- un élément d'obturation (130) mobile entre :
▪ une première position dans laquelle ledit élément d'obturation obture au moins partiellement l'ouverture ; et
▪ une deuxième position dans laquelle l'ouverture est libérée ;
l'ensemble comprenant en outre un dispositif lumineux (120) agencé pour projeter un faisceau lumineux sur l'élément d'obturation positionné dans la deuxième position et/ou sur l'élément d'obturation pendant le déplacement de l'élément d'obturation entre la première position et la deuxième position, au moins une partie du faisceau lumineux projeté étant réfléchie par l'élément d'obturation hors de l'ensemble,
le cadre (110) étant intégré à la paroi de véhicule, la paroi du véhicule étant un pare-chocs du véhicule.

2. Paroi de véhicule selon la revendication 1, dans lequel la deuxième position de l'élément d'obturation (130) définit l'intérieur du cadre et le dispositif lumineux (120) est dans une surface intérieure du cadre (110) ou dans une épaisseur du cadre.

3. Paroi de véhicule selon la revendication 1 ou 2, dans lequel le dispositif lumineux (220) est agencé le long de l'ouverture du cadre (110) et dans lequel le dispositif lumineux est en outre agencé de manière à émettre des rayons lumineux (221) directement hors de l'ensemble.

4. Paroi de véhicule selon la revendication 3, dans lequel le dispositif lumineux (220) est agencé de façon à ce que les rayons lumineux (221) émis directement hors de l'ensemble réalisent une fonction de signalisation.

5. Paroi de véhicule selon l'une des revendications précédentes, comprenant une pluralité de dispositifs lumineux (120 ; 220) agencés sur le cadre le long de l'ouverture (140).

6. Paroi de véhicule selon l'une des revendications précédentes dans laquelle, dans la première position, l'élément d'obturation (130) obture complètement l'ouverture (140) et assure une continuité du cadre (110).

7. Paroi de véhicule selon l'une des revendications précédentes, dans lequel l'élément d'obturation (130) comprend une surface réfléchissante apte à réfléchir de manière directive les rayons lumineux émis par le dispositif lumineux (120 ; 220).

8. Paroi de véhicule selon l'une des revendications 1 à 7, dans lequel l'élément d'obturation (130) comprend une surface diffusante apte à réfléchir par diffusion des rayons lumineux émis par le dispositif lumineux (120 ; 220).

9. Véhicule comprenant une paroi de véhicule selon l'une des revendications 1 à 8.

## Patentansprüche

1. Fahrzeugwand, ausgestattet mit einer Baugruppe (100) für ein Kraftfahrzeug, wobei die Baugruppe (100) umfasst:
- einen Rahmen (110), der eine Öffnung (140) begrenzt;
- ein Verschlusselement (130), das beweglich ist zwischen:
- einer ersten Position, in der das Verschlusselement die Öffnung zumindest teilweise verschließt; und
- einer zweiten Position, in der die Öffnung freigegeben ist;
wobei die Baugruppe ferner eine Lichtvorrichtung (120) umfasst, die angeordnet ist, um einen Lichtstrahl auf das in der zweiten Position befindliche Verschlusselement und/oder auf das Verschlusselement während der Bewegung des Verschlusselements zwischen der ersten Position und der zweiten Position zu projizieren, wobei mindestens ein Teil des projizierten Lichtstrahls durch das Verschlusselement aus der Baugruppe heraus reflektiert wird,
wobei der Rahmen (110) in die Fahrzeugwand integriert ist, wobei die Fahrzeugwand eine Stoßstange des Fahrzeugs ist.

2. Fahrzeugwand nach Anspruch 1, wobei die zweite Position des Verschlusselements (130) das Innere des Rahmens definiert und die Lichtvorrichtung (120) sich in einer Innenfläche des Rahmens (110) oder in einer Dicke des Rahmens befindet.

3. Fahrzeugwand nach Anspruch 1 oder 2, wobei die Lichtvorrichtung (220) entlang der Öffnung des Rahmens (110) angeordnet ist und wobei die Lichtvorrichtung ferner so angeordnet ist, dass sie Lichtstrahlen (221) direkt aus der Baugruppe heraus emittiert.

4. Fahrzeugwand nach Anspruch 3, wobei die Lichtvorrichtung (220) so angeordnet ist, dass die direkt aus der Baugruppe emittierten Lichtstrahlen (221) eine Signalisierungsfunktion erfüllen.

5. Fahrzeugwand nach einem der vorhergehenden Ansprüche, umfassend eine Vielzahl von Lichtvorrichtungen (120; 220), die am Rahmen entlang der Öffnung (140) angeordnet sind.

6. Fahrzeugwand nach einem der vorhergehenden Ansprüche, wobei in der ersten Position das Verschlusselement (130) die Öffnung (140) vollständig verschließt und eine Kontinuität des Rahmens (110) gewährleistet.

7. Fahrzeugwand nach einem der vorhergehenden Ansprüche, wobei das Verschlusselement (130) eine reflektierende Oberfläche umfasst, die geeignet ist, die von der Lichtvorrichtung (120; 220) emittierten Lichtstrahlen gerichtet zu reflektieren.

8. Fahrzeugwand nach einem der Ansprüche 1 bis 7, wobei das Verschlusselement (130) eine streuende Oberfläche umfasst, die geeignet ist, die von der Lichtvorrichtung (120; 220) emittierten Lichtstrahlen durch Streuung zu reflektieren.

9. Fahrzeug, umfassend eine Fahrzeugwand nach einem der Ansprüche 1 bis 8.

## Claims

1. A vehicle wall equipped with an assembly (100) for a motor vehicle, the assembly (100) comprising:
- a frame (110) delimiting an opening (140);
- a closure element (130) movable between:
▪ a first position in which said closure element at least partially closes the opening; and
▪ a second position in which the opening is released;
the assembly further comprising a luminous device (120) arranged to project a light beam onto the closure element positioned in the second position and/or onto the closure element during the movement of the closure element between the first position and the second position, at least a portion of the projected light beam being reflected by the closure element out of the assembly
the frame (110) being integrated into the vehicle wall, the vehicle wall being a bumper of the vehicle.

2. The vehicle wall according to claim 1, wherein the second position of the closure element (130) defines the interior of the frame and the luminous device (120) is in an interior surface of the frame (110) or in a thickness of the frame.

3. The vehicle wall according to claim 1 or 2, wherein the luminous device (220) is arranged along the opening of the frame (110) and wherein the luminous device is further arranged to emit light rays (221) directly out of the assembly.

4. The vehicle wall according to claim 3, wherein the luminous device (220) is arranged so that the light rays (221) emitted directly out of the assembly perform a signaling function.

5. The vehicle wall according to one of the preceding claims, comprising a plurality of luminous devices (120; 220) arranged on the frame along the opening (140).

6. The vehicle wall according to one of the preceding claims, wherein, in the first position, the closure element (130) completely closes the opening (140) and ensures continuity of the frame (110).

7. The vehicle wall according to one of the preceding claims, wherein the closure element (130) comprises a reflective surface able to reflect in a directive manner the light rays emitted by the luminous device (120; 220).

8. The vehicle wall according to one of claims 1 to 7, wherein the closure element (130) comprises a diffusing surface able to reflect by diffusion light rays emitted by the luminous device (120; 220).

9. A vehicle comprising a vehicle wall according to one of claims 1 to 8.
